# EUROPÄISCHE PATENTSCHRIFT

(11) **EP 0 629 297 B1**
(45) Veröffentlichungstag und Bekanntmachung des Hinweises auf die Patenterteilung: **13.09.1995**
(21) Anmeldenummer: 93903151.4
(22) Anmeldetag: 06.02.1993
(51) Int. Cl.: G02B 6/30

(54) **INTEGRIERTES OPTISCHES BAUELEMENT**
INTEGRATED OPTICAL COMPONENT
COMPOSANT OPTIQUE INTEGRE

(30) Priorität: 07.03.1992 DE 4207311; 13.03.1992 DE 4208278
(43) Veröffentlichungstag der Anmeldung: 21.12.1994
(73) Patentinhaber: ROBERT BOSCH GMBH, 70442 Stuttgart (DE)
(72) Erfinder: MAYER, Klaus-Michael, D-70839 Gerlingen (DE)
(86) Internationale Anmeldenummer: DE9300103
(87) Internationale Veröffentlichungsnummer: WO9318422

(56) Entgegenhaltungen:
- GB-A- 2 000 877
- US-A- 4 666 236
- APPLIED OPTICS Bd. 17, Nr. 6, 15. März 1978, New York US, Seiten 895-898; J.T. BOYD et al. : 'Optical coupling from fibers to channel waveguides formed on silicon'
- PATENT ABSTRACTS OF JAPAN vol. 16, no. 121 (P-1329) 26 March 1992 ; & JP-A-3 288 102
- PATENT ABSTRACTS OF JAPAN vol. 15, no. 127 (P-1185) 27 March 1991 ; & JP-A-3 012 612

## Beschreibung

### STAND DER TECHNIK

Die Erfindung betrifft ein integriertes optisches Bauelement, insbesondere einen Modulator, Richtkoppler, Schalter, Polarisator, Verteiler od.dgl. nach der Gattung des Hauptanspruchs sowie ein Verfahren zur Herstellung eines solchen Bauelements.

Der zunehmende Einsatz integriert-optischer Komponenten für die optische Nachrichtentechnik, für die Sensorik und den Computerbereich (optischer Datenbus) läßt der optischen Anschlußtechnik (Chip-Faser-Kopplung) eine immer größere Bedeutung zukommen. Bereits kleinere private Vermittlungsstellen mit etwa 1.000 Teilnehmeranschlüssen benötigen dabei beispielsweise mehrere tausend optische Anschlüsse zwischen den einzelnen Subschaltstufen, da Anzahl und Komplexität der auf einzelnen Substraten integrierten optischen Komponenten auf Grund der extremen Aspektverhältnisse in der Optik stark eingeschränkt ist. In solchen Anwendungsfällen bestimmt die Realisierbarkeit und Zuverlässigkeit (mechanische und thermische Stabilität) der optischen Anschlußtechnik und der erforderliche Anschlußaufwand letztlich den erreichbaren Ausbaugrad eines optischen Vermittlungssystems.

Der Licht-Einkoppelwirkungsgrad bei der Kopplung von Glasfasern und integrierten Wellenleitern der Bauelement hängt sehr stark von dem Abstand der Endflächen, einer lateralen Verschiebung sowie einer Winkelverkippung der optischen Achsen gegeneinander ab. Die Glasfaser besitzt bei der Ankopplung demnach fünf Freiheitsgrade, die unabhängig voneinander optimiert werden müssen: einen axialen Freiheitsgrad, zwei laterale Freiheitsgrade und zwei Winkelfreiheitsgrade. Bei den für Glasfasern typischen Feldverteilungen führt z. B. ein lateraler Versatz von nur wenigen µm bereits zu Koppelverlusten im dB-Bereich Ein effektives Ankoppelverfahren erfordert eine Reduktion der Freiheitsgrade sowie eine Möglichkeit der gleichzeitigen Positionierung aller Fasern eines Bündels. Aus Appl. Opt. 17 (1978), 895, "Optical coupling from fibres to channel waveguides formed on silicon", J. T. Boyd und S. Sriram, ist es bekannt, V-Nuten als Positioniergräben für die Glasfasern in ein Siliziumsubstrat einzuätzen. Die anisotrop geätzten V-Nuten werden allseitig von langsam ätzenden {111}-Ebenen begrenzt, die einen Winkel von 54,7° zur Wafer-Oberfläche einschließen. Fluchtend mit diesen V-Nuten sind die integrierten Wellenleiter angeordnet, wobei die Breite der Nuten so optimiert werden kann, daß durch die sich ergebende Nutform der Faserkern in der gleichen horizontalen Ebene wie der Lichtwellenleiter zu liegen kommt. Die im Bereich der Kopplungsfläche zum Lichtwellenleiter liegende Stirnfläche der V-Nut ist ebenfalls unter einem Winkel von 54,7° geneigt, so daß die Glasfaser nicht ganz bis zum Wellenleiter herangeschoben werden kann. Als Lösung für dieses Problem wird von Boyd und Sriram vorgeschlagen, die Glasfaser mit einer um ebenfalls 54,7° geneigten Endfläche zu versehen, um damit den Faserkern bis auf Stoßkopplung an den integrierten Lichtwellenleiter heranzuschieben. Dieses Verfahren hat jedoch den Nachteil, daß eine aufwendige Endflächenbearbeitung der Faser notwendig ist und die Faser nur in einer bestimmten Lage in die Nut eingelegt werden darf. Bei der Kopplung besteht darüber hinaus die Gefahr, daß die beiden Endflächen aufeinandergleiten oder zumindest der Endbereich der Faser daher aus der Nut herausgeschoben wird. Eine zusätzliche Schwierigkeit ergibt sich aus der Notwendigkeit, nicht nur die Faser, sondern auch den integrierten Wellenleiter mit einer entsprechend geneigten Endfläche zu versehen.

Weiterhin ist es aus der genannten Literaturstelle bekannt, in geätzten V-Nuten Glasfasern zu haltern und durch anschließendes Einfüllen von Flüssigpolymer (Polyurethan) einen Anschluß zum organanischen Lichtwellenleiter herzustellen, der in den verlängerten V-Nuten geführt und durch diese definiert wird. Da die Größe der Nuten am Koppelpunkt jedoch durch den Glasfasermanteldurchmesser vorgegeben ist, sind derartige Wellenleiter extrem hochmodig und für monomodige Systeme der Nachrichtentechnik nicht zu gebrauchen. Ferner wird ein Tapern der Kanalwellenleiter vorgeschlagen, wobei die Breite und damit auch die Tiefe der V-Nut in ihrem weiteren Verlauf allmählich verkleinert wird, um damit den Übergang zu üblichen Dünnfilm-Wellenleitern zu realisieren. Da aber auch in diesem Fall ein Übergang vom Faserkern der Glasfaser zum Kanalwellenleiter ein großer Sprung im Durchmesser der Wellenleiterstrukturen erfolgt, ist ein Anschwingen höherer Moden unvermeidlich und damit ein hoher Koppelwirkungsgrad im Single-Mode-Betrieb nicht zu erwarten.

### VORTEILE DER ERFINDUNG

Das erfindungsgemäße integrierte optische Bauelement und das erfindungsgemäße Verfahren zu seiner Herstellung haben demgegenüber den Vorteil, daß eine selbstjustierende Kopplung von Glasfasern bzw. Faseranordnungen an Lichtwellenleiter aus einem optischen Polymer in einfacher Weise realisierbar ist. Die Endflächenbearbeitung der Lichtwellenleiter ist einfach und vorzugsweise durch Laser-Ablation ausführbar. Die Herstellung der Haltenuten für die Glasfasern kann durch anisotropes Ätzen auf einfache Weise nach einer etablierten Technologie erfolgen. Dabei wird eine hohe Genauigkeit der relativen Lage von Faser- und Wellenleiterendflächen erreicht. Durch leicht realisierbare Feldanpassungen mittels Belichtungsverfahren kann ein hoher Koppelwirkungsgrad erreicht werden. Weiterhin kann eine große thermische und mechanische Stabilität durch gemeinsamen Verguß von Wellenleiter und Faser erreicht werden. Das erfindungsgemäße Bauelement eignet sich in besonderer Weise für monomodige Wellenleiterstrukturen.

Durch die in den Unteransprüchen aufgeführten Maßnahmen sind vorteilhafte Weiterbildungen und Verbesserungen des im Hauptanspruch angegebenen Bauelements möglich.

Eine besonders einfache und mechanisch stabile Herstellung des Lichtwellenleiters kann dadurch bewirkt werden, daß eine die den Lichtwellenleiter tragende Pufferschicht und das Kunststoffmaterial im V-Graben bis zur Ebene der Endflächen überdeckende Schicht aus einem optischen, durch Belichtung in seinem Brechungsindex veränderbaren Polymer versehen ist, wobei der Lichtwellenleiter durch entsprechende Belichtung dieser Schicht als Teil derselben ausgebildet ist. Hierdurch kann der Lichtwellenleiter in variabler Weise nach der mechanischen Anbringung der Polymerschicht ausgebildet werden. Der als Lichtwellenleiter ausgebildete Bereich der Schicht weist einen höheren Brechungsindex auf.

Das Kunststoffmaterial zur Ausfüllung des Positioniergrabens ist zweckmäßigerweise ebenfalls ein optisches Polymer, das insbesondere mit dem der die Pufferschicht überdeckenden Schicht identisch ist. Eine optimale Feldanpassung kann hier dadurch erfolgen, daß das glasfaserseitige Ende des Lichtwellenleiters adiabatisch auf den Durchmesser des Glasfaserkerns aufgeweitet ist. Hierbei ist nicht nur eine laterale, sondern zusätzlich oder alternativ auch eine vertikale Aufweitung möglich, die sich in das optische Polymer hinein erstreckt, das die V-Nut ausfüllt.

Zur Feldanpassung des Lichtwellenleiters zur Glasfaser hin kann in vorteilhafter Weise neben der geometrischen Anpassung der den Lichtwellenleiter umgebende Bereich des optischen Polymers einen adiabatischen, den Brechungsindexunterschied zwischen Lichtwellenleiter und dem umgebenden Bereich zur Glasfaser hin verringernden Indexverlauf aufweisen.

Eine weitere vorteilhafte Möglichkeit zur Anpassung und Ankopplung besteht darin, daß das glasfaserseitige Ende des Lichtwellenleiters spitz zuläuft und in einem weiteren Lichtwellenleiter mit niedrigerem Brechungsindex mündet, der sich bis zum Glasfaserkern erstreckt. Hierbei ist auch noch bei gegenüber dem Glasfaserkern relativ stark führendem Lichtwellenleiter mit kleinen Querschnittsabmessungen ein hoher Koppelwirkungsgrad möglich. Der weitere Lichtwellenleiter kann eine größere Ausdehnung in der Breite und/oder in der Tiefe aufweisen und der Dimensionierung des Glasfaserkerns an der Kopplungsendfläche angepaßt sein.

In vorteilhafter Ausbildung des erfindungsgemäßen Verfahrens kann das Aufbringen der Schicht und das Ausfüllen des Positioniergrabens in einem Arbeitsgang mit demselben optischen Polymer durchgeführt werden. Hierdurch kann die Herstellung einfach und kostengünstig durchgeführt werden.

Die Ausbildung des Lichtwellenleiters erfolgt zweckmäßigerweise über eine auf die Polymerschicht aufgelegte Belichtungsmaske, wobei durch Fotopolymerisation eine Brechungsindexerhöhung im Lichtwellenleiterbereich durchgeführt wird. Weiterhin kann beispielsweise im Falle nichtlinearoptischer Polymere eine Belichtungsmaske auf die Polymerschicht aufgelegt und durch einen UV-Fotoausbleichprozeß eine Brechungsindexreduzierung von Bereichen durchgeführt werden, die den Lichtwellenleiter begrenzen.

Um zur Optimierung der Feldanpassung zwischen Glasfaser und Lichtwellenleiter eine adiabatische Aufweitung des Lichtwellenleiters vor dem Glasfaserkern durchzuführen, wird zweckmäßigerweise zur lateralen Aufweitung bis auf den Durchmesser des Glasfaserkerns eine Belichtungsmaske mit sich aufweitender Maskenöffnung verwendet. Alternativ oder zusätzlich wird zur vertikalen Aufweitung bis auf den Durchmesser des Glasfaserkerns die Belichtungsintensität und/oder die Belichtungszeit zur Glasfaser hin rampenartig vergrößert. Um noch eine zusätzliche Optimierung der Feldanpassung durchführen zu können, kann eine zweite Maske mit variabler Transparenz für eine Nachbelichtung verwendet werden, die faserseitig eine höhere Transparenz und lichtwellenleiterseitig eine geringere Transparenz aufweist.

In einem zweiten Taper-Konzept wird zur Herstellung und Ankopplung eines spitz zulaufenden Lichtwellenleiters zunächst in einem ersten Belichtungsschritt mit einer ersten Belichtungsmaske ein erster spitz zur Glasfaser hin zulaufender Lichtwellenleiter gebildet, und danach wird in einem zweiten Belichtungsschritt ein zweiter, den ersten Lichtwellenleiter mit der Kopplungsendfläche verbindender Lichtwellenleiter mit geringerem Brechungsindex gebildet, wobei der zweite Lichtwellenleiter in seinem Durchmesser dem Glasfaserkern angepaßt ist.

Mit dem erfindungsgemäßen Verfahren kann in vorteilhafter Weise eine Vielzahl von nebeneinanderliegenden Lichtwellenleitern bzw. Anschlüssen gleichzeitig hergestellt werden.

### ZEICHNUNG

Ausführungsbeispiele der Erfindung sind in der Zeichnung dargestellt und in der nachfolgenden Beschreibung näher erläutert. Es zeigen:
- Fig. 1: ein integriertes optisches Bauelement mit einer angekoppelten Glasfaser in einem V-Graben in einer Draufsicht als erstes Ausführungsbeispiel,
- Fig. 2: das in Fig. 1 dargestellte Bauelement in einer vertikalen Schnittdarstellung,
- Fig. 3: eine ähnliche Anordnung eines optischen Bauelements mit einer getaperten Struktur in einer Draufsicht als zweites Ausführungsbeispiel,
- Fig. 4: das in Fig. 3 dargestellte Bauelement in einer vertikalen Schnittdarstellung,
- Fig. 5: ein ähnliches optisches Bauelement mit einem spitz auslaufenden Lichtwellenleiter in einer Draufsicht als drittes Ausführungsbeispiel,
- Fig. 6: das in Fig. 5 dargestellte dritte Ausführungsbeispiel im Vertikalschnitt,
- Fig. 7: das in den Fig. 5 und 6 dargestellte Bauelement in einem Vertikalschnitt senkrecht zur Schnittebene gemäß Fig. 6 und
- Fig. 8: dasselbe Bauelement in einer perspektivischen Ansicht zum Wellenleiter hin.

### BESCHREIBUNG DER AUSFÜHRUNGSBEISPIELE

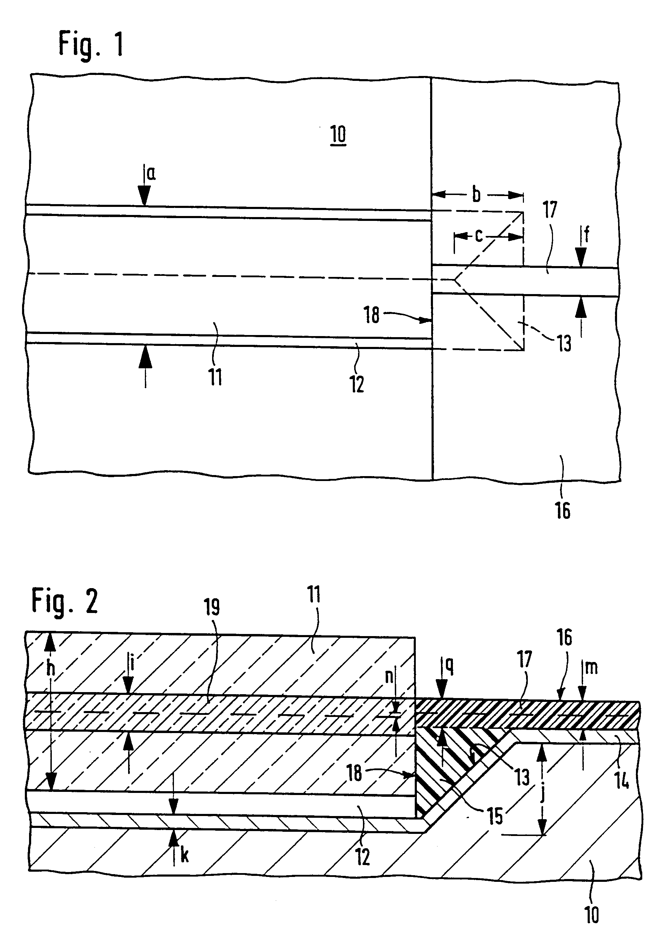

Das in den Fig. 1 und 2 dargestellte integrierte optische Bauelement besteht im wesentlichen aus einem Siliziumsubstrat 10, in das zur Aufnahme einer Glasfaser 11 ein Positioniergraben 12 mit V-förmigem Querschnitt anisotrop eingeätzt wird. Die bekannte anisotrope Ätztechnik weist einen hohen Entwicklungsstand auf und wird auch beim eingangs angegebenen Stand der Technik eingesetzt. Mit Hilfe der Fensteröffnung in einer Ätzmaske wird die Weite a des Positioniergrabens 12 und damit die Tiefe j der geätzten Nut festgelegt. Mit Hilfe von alkalischen Ätzmedien, wie z.B. Kaliumhydroxid, entstehen V-förmige Vertiefungen, die einen sehr präzisen Winkel von 54,7° zur Oberfläche einschließen. Ein solcher Winkel bildet sich auch an einer schrägen Endfläche 13 des Positioniergrabens 12 aus, die sich über eine Länge c in den Graben hinein erstreckt.

Nach dem Ätzen des vorprozessierten Siliziumsubstrats 10 (Wafer), das außer dem Positioniergraben 12 auch nicht dargestellte aktive und/oder passive optische Bauelemente sowie elektronische Anordnungen tragen kann, wird eine optische Pufferschicht 14 mit niedrigem Brechungsindex und einer Dicke k aufgebracht. Hierbei kann es sich um Siliziumdioxid handeln, jedoch kann auch ein organischer Film verwendet werden. Die Pufferschichtdicke muß als Maskenvorhalt bei der Ätzung des Positioniergrabens 12 berücksichtigt werden.

Anschließend wird ganzflächig ein optisches Polymer wie PMMA mit Fotoinitiator aufgebracht, das im Bereich des Positioniergrabens 12 zu einer Auffüllung 15 dieses Grabens und im übrigen Bereich zur Bildung einer die Oberfläche überziehenden Schicht 16 führt.

In der Schicht 16 wird nun ein Lichtwellenleiter 17 mit der Breite f durch UV-Belichtung erzeugt. Eine lokale Fotopolymerisation führt zu einer Brechungsindexerhöhung im belichteten Bereich. Die nicht dargestellte Belichtungsmaske wird paßgenau an den geätzten V-Nuten des Positioniergrabens 12 oder durch zusätzliche Justierhilfen ausgerichtet.

Entsprechend der Gestalt der langgestreckten Maskenöffnung bildet sich dann der Lichtwellenleiter 17.

Anstelle der beschriebenen Fotopolymerisation kann der Lichtwellenleiter 17 bei Verwendung einiger nichtlinearoptischer Polymere auch prinzipiell gleichwertig durch eine lokale Thermopolung und/oder durch einen UV-Fotoausbleichprozeß erfolgen.

Die laterale Lichtführung wird durch einen für monomodige Wellenleiter in der Regel geringen Indexunterschied zwischen belichtetem (Lichtwellenleiter 17) und unbelichtetem Bereich realisiert (schwache Führung). Die vertikale Ausdehnung des Lichtwellenleiters 17 ist im Falle dünner Schichten (ungefähr 2 µm) durch die Dicke m der Polymerschicht 16 gegeben, wobei die vertikale Wellenführung durch den Indexsprung einerseits zur Pufferschicht (14) und andererseits zu Luft oder gegebenenfalls einer oberen Deckschicht bestimmt wird (starke Führung). Die entsprechenden Feldverteilungen lassen sich bei geringen Schichtdicken in der Regel gut an die Feldverteilungen aktiver optischer Halbleiterbauelemente auf dem integriert-optischen Chip anpassen.

Im Bereich größerer Schichtdicken, also im Bereich der Auffüllung 15, wird die vertikale Ausdehnung des Lichtwellenleiters 17 durch die wirksame Tiefe des Fotopolymerisationsprozesses begrenzt. Bei starker UV-Absorption der fotopolymerisierbaren Materialien hängt diese Tiefe von den Belichtungsparametern und der Materialzusammensetzung (z.B. Anteil des Fotoinitiators) ab, so daß sich der Kanalwellenleiter hier gezielt auf eine einstellbare Tiefe q unter die Oberfläche ausdehnen läßt. Gleichzeitig wird in diesen Bereichen die Lichtwelle nach unten ebenfalls schwach geführt, wie dies in lateraler Richtung der Fall ist, was die Feldanpassung an die radialsymmetrische Verteilung der Faser erleichtert.

Bis zu diesem Fertigungsschritt ist der Positioniergraben 12 mit dem optischen Polymer ausgefüllt. Für die Chip-Faser-Kopplung muß der Positioniergraben 12 nun zur Aufnahme der Glasfaser 11 mit dem Durchmesser h freigelegt werden. Dies kann durch Laser-Ablation mittels eines Excimer-Lasers erfolgen. Die dabei entstehende, ausreichend glatte Schnittkante 18 durch den Lichtwellenleiter 17 und die Auffüllung 15 macht eine weitere Bearbeitung der Lichtleiterendfläche entbehrlich. Der Schnitt erfolgt in einem Abstand b von der oberen Endkante des Positioniergrabens 12, wobei dieser Abstand b die Ausdehnung c der schrägen Endfläche übertrifft und somit eine Stoßkopplung zwischen Glasfaser 11 und Lichtwellenleiter 17 ermöglicht, die nur durch die Restrauhigkeit der Lichtleiterendfläche beschränkt ist. Die relative vertikale Lage n der optischen Achsen von Lichtwellenleiter 17 und Glasfaser 11 kann so insgesamt über der Tiefe der V-Nut so optimiert werden, daß die optischen Felder möglichst gut überlappen. Der Glasfaserkern 19 mit dem Durchmesser i fluchtet dann ausreichend exakt mit dem Lichtwellenleiter 17. Im Falle einer stark führenden oberen Deckschicht, z.B. Luft, kann die Glasfaser 11 auch geringfügig tiefer gelegt werden, so daß der Glasfaserkern 19 oben bündig mit dem Lichtwellenleiter 17 abschließt, wie dies in Fig. 2 dargestellt ist.

Falls die Pufferschicht 14 eine organische Pufferschicht ist, so wird diese durch die Laser-Ablation ebenfalls entfernt, was im Masken-Layout über die Breite der zu ätzenden Strukturen zu berücksichtigen ist.

Bei dem beschriebenen Herstellungsverfahren werden mit nur einem Lithographie-/Ätzschritt für den Positioniergraben 12 und einer UV-Belichtung für den Lichtwellenleiter 17 alle Freiheitsgrade der Chip-Faser-Kopplung durch die Maskenprozesse mit ausreichender Präzision festgelegt. Es kann dann noch ein thermischer Ausheizprozeß zur Stabilisierung der fotopolymerisierten Wellenleiterstrukturen erfolgen, bevor durch die Laserbehandlung die Endflächen geschaffen und der Positioniergraben 12 freigelegt wird. Die Faser kann dann ohne aktive Justage direkt in den Positioniergraben 12 eingelegt und fixiert werden. Dabei ist festzuhalten, daß zur Vereinfachung in den Fig. 1 und 2 und auch in den übrigen noch zu beschreibenden Figuren lediglich ein einziger Positioniergraben 12 mit einer Glasfaser 11 und einem Lichtwellenleiter 17 dargestellt sind. In der Praxis wird jedoch eine Vielzahl paralleler Positioniergräben 12 geschaffen, und eine entsprechende Anzahl von Lichtwellenleitern 17 wird durch Belichtung erzeugt, bevor wiederum eine entsprechende Anzahl von Glasfasern 11 eingelegt und fixiert werden.

Zur Erhöhung der thermischen und mechanischen Stabilität kann durch gemeinsamen Verguß der eingelegten Glasfasern 11 und der Lichtwellenleiter 17 eine gemeinsame obere Abdeckschicht geschaffen werden, die in den Figuren nicht dargestellt ist. Hierzu kann beispielsweise ein UV-härtbares optisches Flüssigpolymer verwendet werden. Wird der Indexsprung zu dieser oberen Abdeckschicht gering gehalten, kann durch eine vertikal schwache Führung eine weitere Annäherung der Feldverteilungen vorgenommen werden.

Es ist selbstverständlich auch möglich, für die Auffüllung 15 ein anderes Kunststoffmaterial geringer optischer Dämpfung und geeigneten Brechungsindices als für die Schicht 16 und den Lichtwellenleiter 17 zu verwenden, sofern auf eine starke Führung im Lichtwellenleiter 17 im Anschlußbereich an die Glasfaser 11 ein besonderer Wert gelegt wird.

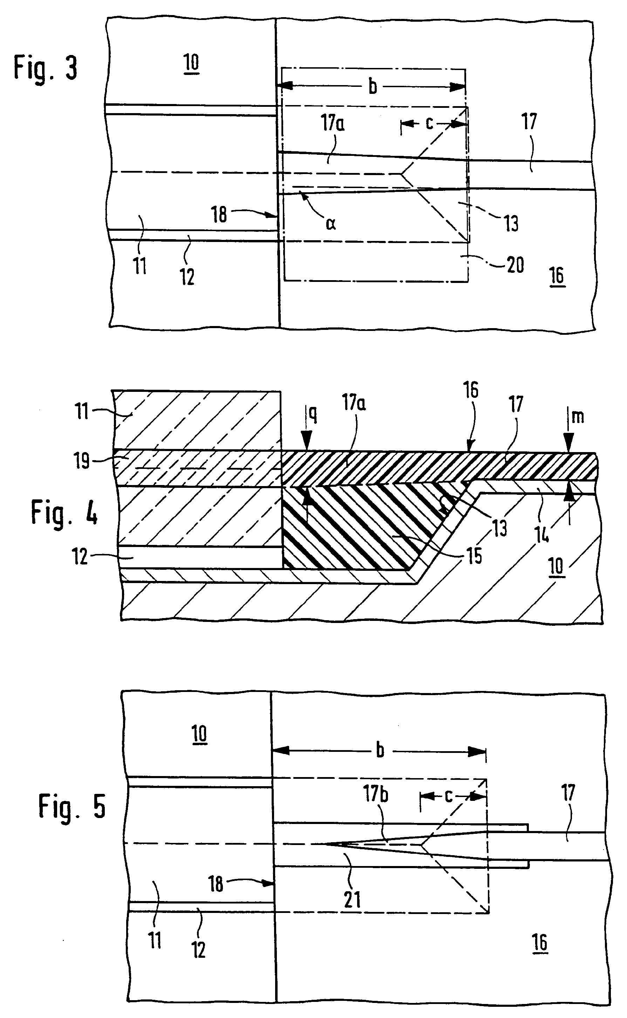

Bei dem in den Fig. 3 und 4 dargestellten zweiten Ausführungsbeispiel sind gleiche oder gleich wirkende Teile und Bereiche mit denselben Bezugszeichen versehen und nicht nochmals beschrieben.

Zur Optimierung der Feldanpassung zwischen der Glasfaser 11 und dem Lichtwellenleiter 17 wird hier eine getaperte Struktur verwendet. Der glasfaserseitige Endbereich 17a des Lichtwellenleiters 17 ist adiabatisch auf den Durchmesser des Glasfaserkerns 19 aufgeweitet. Dies geschieht lateral durch eine entsprechende Weitung der Maskenöffnung der Belichtungsmaske, deren Längsränder einen kleinen Öffnungwinkel α aufweisen. In einem typischen Beispiel ist α ≦ 1°, und die Taperlänge ist ungefähr 500µm. Bei einer Lichtwellenleiterbreite von 4µm und einem Faserkerndurchmesser von ca. 10 µm.

Die vertikale Ausdehnung des Endbereichs 17a des Lichtwellenleiters 17 hängt von der Materialzusammensetzung und der Belichtung ab. Beispielsweise ist bei einem PMMA-Material mit Fotoinitiator die maximal durch UV-Belichtung erzielbare Indexerhöhung eine Funktion der Konzentration des Fotoinitiators. Dieser Sättigungseffekt kann beim vertikalen Tapern dahingehend ausgenutzt werden, daß bei starker Überbelichtung des Lichtwellenleiters einerseits dessen Brechungsindex beim Sättigungswert konstant bleibt, andererseits aber die Tiefenausdehnung mit der Belichtungsdosis (Intensität . Zeit) zunimmt. Hierdurch kann der Endbereich 17a zur Auffüllung 15 hin vertikal verbreitert werden, wie dies in Fig. 4 dargestellt ist. Die zunehmende Verbreiterung zum Glasfaserkern hin kann durch einen sogenannten Graukeil erzeugt werden, der faserseitig eine hohe Transparenz und lichtwellenleiterseitig eine geringere Transparenz aufweist. Diese Aufweitung auf eine Breite q gegenüber der Dicke m der Schicht 16 kann selbstverständlich auch beim ersten Ausführungsbeispiel durchgeführt werden, bei dem die laterale Breite konstant bleibt.

Durch eine UV-Nachbelichtung der Schicht 16 im Bereich der getaperten Struktur kann der Brechungsindex außerhalb des Lichtwellenleiters 17 nachträglich angehoben werden, so daß mit kleiner werdendem Brechungsindexunterschied die Lichtführung schwächer wird und die Feldanpassung zur Glasfaser 11 hin weiter optimiert werden kann. Auch diese Nachbelichtung kann einen adiabatischen Indexverlauf erzeugen, wenn wiederum eine Maske mit variabler Transparenz verwendet wird ("Graukeil"). In Fig. 3 ist der nachzubelichtende Bereich 20 durch eine Umrandung gekennzeichnet. Die Belichtung für parallel angeordnete Faserarrays kann streifenweise über alle Positioniergräben 12 durch einfache- Maskenjustierung erfolgen.

Bei dem in den Fig. 5 bis 8 dargestellten dritten Ausführungsbeispiel ist der glasfaserseitige Endbereich 17b des Lichtwellenleiters 17 spitz zulaufend ausgebildet und mündet noch vor der Schnittkante 18. Dieser Endbereich 17b ist von einem weiteren Lichtwellenleiter 21 umgeben, der die Verbindung zur Glasfaser 11 bzw. zum Glasfaserkern 19 herstellt. Hierdurch können auch sehr dünne Lichtwellenleiter 17 optimal an einen relativ dickeren Glasfaserkern 19 angekoppelt werden. Der gegenüber dem Lichtwellenleiter 17 einen etwas niedrigeren Brechungsindex aufweisende weitere Lichtwellenleiter 21 wird durch einen zweiten Belichtungsprozeß mit einer eigenen Belichtungsmaske erzeugt. Bei größerem Querschnitt und bei geeignetem Indexprofil mit entsprechend größerer Tiefenausdehnung der optischen Felder im Bereich der Auffüllung 15 kann dann die Feldverteilung der Glasfaser 11 (typischer Glasfaserkern-Durchmesser i ungefähr = 8-10 µm) zur Erzielung hoher Koppelwirkungsgrade angenähert werden. Durch die spitz zulaufende Gestalt des Endbereichs 17b wird die darin geführte Lichtwelle in den weiteren Lichtwellenleiter 21 mit niedrigerem Brechungsindex übergekoppelt. Die Feldverteilung im sehr schmalen Lichtwellenleiter 17 ist beispielsweise an optoelektronische Halbleiterbauelemente angepaßt, und über den Lichtwellenleiter 21 wird dann eine Anpassung an die Feldverteilung der Glasfaser 11 erreicht.

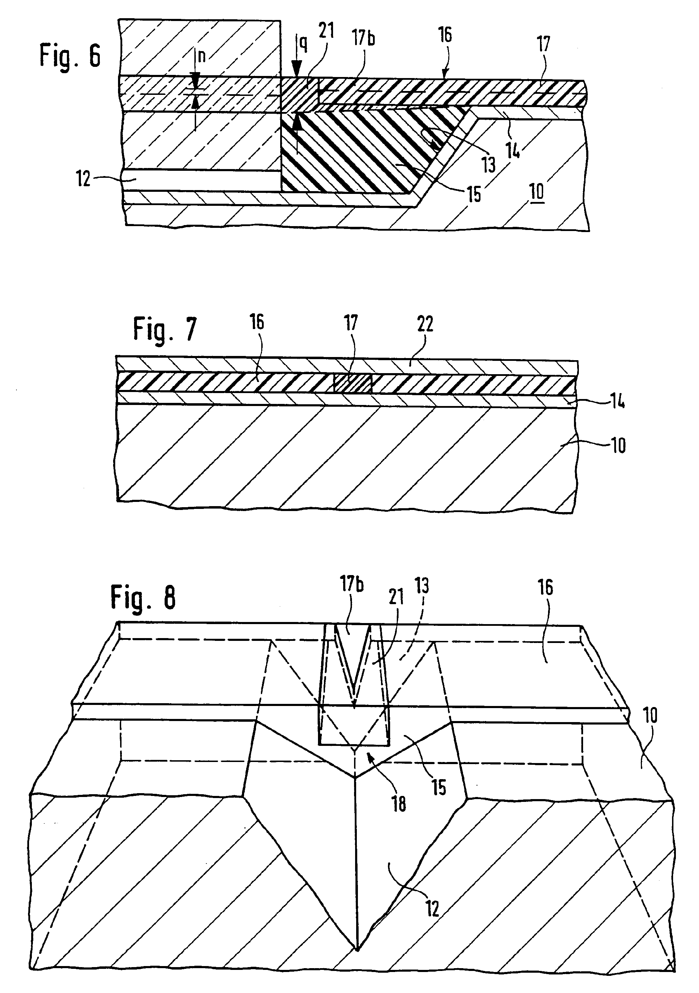

In den Fig. 7 und 8 ist noch eine obere Deckschicht 22 dargestellt, die die Schicht 16 bzw. den Lichtwellenleiter 17 überdeckt und auch die Glasfaser 11 mitüberdecken kann. Fig. 7 zeigt dabei einen Querschnitt durch die Anordnung senkrecht zur Längsrichtung des Lichtwellenleiters außerhalb des Positioniergrabens 12.

In der perspektivischen Ansicht gemäß Fig. 8 wurde zur Vereinfachung der Darstellung die Pufferschicht 14 weggelassen. Auch auf eine Darstellung der Glasfaser 11 und der Deckschicht 22 wurde verzichtet.

Anstelle der beschriebenen Strukturierungstechnik (UV-Bestrahlung) zur Bildung des Lichtwellenleiters können prinzipiell auch andere Strukturierungstechniken treten, wie eine Ion-Implantation oder die Bildung eines Rippenwellenleiters z.B. durch Trockenätzen. Durch derartige Strukturierungstechniken einschließlich der beschriebenen UV-Bestrahlung oder des UV-Fotoausbleichprozesses lassen sich neben der Herstellung des Lichtwellenleiters auch noch andere Leitungsstrukturen, Schalter od.dgl. in einheitlicher Technologie auf dem integriert-optischen Chip erzeugen.

Je nach Anforderung an die Kopplungswirkungsgrade zwischen Faser und Wellenleiter können die beschriebenen Maßnahmen in mehr oder weniger ausgeprägter Weise durchgeführt werden. Sind die Anforderungen nicht ganz so hoch, so kann beispielsweise die einfachere Ausführung gemäß Fig. 1 ausreichen.

## Patentansprüche

1. Integriertes optisches Bauelement, insbesondere Modulator, Richtkoppler, Schalter, Polarisator, Verteiler, mit einem auf einem mit wenigstens einer optischen Pufferschicht mit niedrigem Brechungsindex versehenen Siliziumsubstrat angeordneten Lichtwellenleiter aus einem optischen Polymer und mit einem anisotrop in das Substrat eingeätzten, im wesentlichen fluchtend zum Lichtwellenleiter ausgerichteten Positioniergraben mit V-förmigem Querschnitt zur Aufnahme einer durch Stoßkopplung an die Kopplungsendfläche des Lichtwellenleiters anzukoppelnden Glasfaser, dadurch gekennzeichnet, daß der Positioniergraben (12) kopplungsseitig einen schrägverlaufenden Endbereich aufweist, der mit einem Kunststoffmaterial (15) ausgefüllt ist, wobei sich der Lichtwellenleiter (17) auf dem Kunststoffmaterial (15) bis zu einer senkrecht zur axialen Richtung des Lichtwellenleiters (17) verlaufenden, in der Ebene der Kopplungsendfläche liegenden Endfläche (18) des Kunststoffmaterials (15) fortsetzt, und daß diese Endfläche (18) außerhalb des schräg verlaufenden Endbereichs (13) des Positioniergrabens (12) angeordnet ist.

2. Bauelement nach Anspruch 1, dadurch gekennzeichnet, daß eine die den Lichtwellenleiter (17) tragende Pufferschicht (14) und das Kunststoffmaterial (15) bis zur Ebene der Endfläche (18) überdeckende Schicht (16) aus einem optischen, durch Belichtung in seinem Brechungsindex veränderbaren Polymer vorgesehen ist, wobei der Lichtwellenleiter (17) durch entsprechende Belichtung dieser Schicht (16) als Teil derselben ausgebildet ist.

3. Bauelement nach Anspruch 2, dadurch gekennzeichnet, daß der als Lichtwellenleiter (17) ausgebildete Bereich der Schicht (16) einen höheren Brechungsindex aufweist.

4. Bauelement nach einem der vorhergehenden Ansprüche, dadurch gekennzeichnet, daß der Positioniergraben (12) eine Dimensionierung aufweist, durch die der Glasfaserkern (19) der eingelegten Glasfaser (11) mit dem Lichtwellenleiter (17) fluchtet.

5. Bauelement nach einem der Ansprüche 2 bis 4, dadurch gekennzeichnet, daß das Kunststoffmaterial (15) zur Auffüllung des Positioniergrabens (12) ein optisches Polymer ist.

6. Bauelement nach Anspruch 5, dadurch gekennzeichnet, daß das Kunststoffmaterial (15) mit dem optischen Polymer der die Pufferschicht (14) überdeckenden Schicht (16) identisch ist.

7. Bauelement nach einem der Ansprüche 2 bis 6, dadurch gekennzeichnet, daß der glasfaserseitige Endbereich (17a) des Lichtwellenleiters (17) adiabatisch auf den Durchmesser des Glasfaserkerns (19) aufgeweitet ist.

8. Bauelement nach Anspruch 7, dadurch gekennzeichnet, daß eine laterale und/oder vertikale Aufweitung vorgesehen ist.

9. Bauelement nacheinem der Ansprüche 2 bis 6, dadurch gekennzeichnet, daß der glasfaserseitige Endbereich (17b) des Lichtwellenleiters (17) spitz zuläuft und in einem weiteren Lichtwellenleiter (21) mit niedrigerem Brechungsindex mündet, der sich bis zum Glasfaserkern (19) erstreckt.

10. Bauelement nach Anspruch 9, dadurch gekennzeichnet, daß der weitere Lichtwellenleiter (21) eine größere Ausdehnung in der Breite und/oder in der Tiefe aufweist und der Dimensionierung des Glasfaserkerns (19) an der Kopplungsendfläche angepaßt ist.

11. Bauelement nach einem der Ansprüche 2 bis 10, dadurch gekennzeichnet, daß zur Feldanpassung des Lichtwellenleiters (17) zur Glasfaser (11) hin der den Lichtwellenleiter (17) umgebende Bereich der optischen Polymer-Schicht (16) einen adiabatischen, den Brechungsindexunterschied zwischen Lichtwellenleiter (17) und diesen umgebendem Bereich zur Glasfaser hin verringernden Indexverlauf aufweist.

12. Verfahren zur Herstellung eines integrierten optischen Bauelements, wie eines Modulators, Richtkopplers, Schalters, Polarisators, Verteilers, das einen auf einem mit wenigstens einer optischen Pufferschicht mit niedrigem Brechungsindex versehenen Siliziumsubstrat angeordneten Lichtwellenleiter aus einem optischen Polymer aufweist, wobei zur Aufnahme einer an den Lichtwellenleiter anzukoppelnden Glasfaser ein Positioniergraben mit V-förmigem Querschnitt im wesentlichen fluchtend zum Lichtwellenleiter mittels einer eine langgestreckte Maskendurchbrechung aufweisenden Belichtungsmaske in das Siliziumsubstrat anisotrop eingeätzt wird, dadurch gekennzeichnet, daß nach dem Ätzen des Positioniergrabens (12)
a) die optische Pufferschicht (14) aufgebracht wird,
b) darüber eine Schicht (16) aus einem optischen Polymer aufgebracht wird, wobei vorher oder gleichzeitig der Positioniergraben (12) mit einem Kunststoffmaterial (15) ausgefüllt wird,
c) durch entsprechende örtliche Belichtung oder Thermopolung dieser Schicht (16) der Lichtwellenleiter (17) gebildet wird und
d) der Positioniergraben (12) bis zu einer vertikal zur axialen Richtung des Lichtwellenleiters (17) verlaufenden, eine Kopplungsendfläche bildenden Ebene (18) freigelegt wird.

13. Verfahren nach Anspruch 12, dadurch gekennzeichnet, daß das Aufbringen der Schicht (16) und das Ausfüllen des Positioniergrabens (12) in einem Arbeitsgang mit demselben optischen Polymer durchgeführt wird.

14. Verfahren nach Anspruch 12 oder 13, dadurch gekennzeichnet, daß eine Belichtungsmaske auf die Polymer-Schicht (16) aufgelegt und durch Fotopolymerisation eine Brechungsindexerhöhung in einem Bereich durchgeführt wird, der als Lichtwellenleiter (17) dienen soll.

15. Verfahren nach Anspruch 12 oder 13, dadurch gekennzeichnet, daß eine Belichtungsmaske auf die Polymer-Schicht (16) aufgelegt und durch einen UV-Fotoausbleichprozeß eine Brechungsindexreduzierung von Bereichen durchgeführt wird, die den Lichtwellenleiter (17) begrenzen.

16. Verfahren nach Anspruch 14 oder 15, dadurch gekennzeichnet, daß zur Optimierung der Feldanpassung zwischen Glasfaser (11) und Lichtwellenleiter (17) eine adiabatische Aufweitung des Lichtwellenleiters (17) vor dem Glasfaserkern (19) durchgeführt wird.

17. Verfahren nach Anspruch 16, dadurch gekennzeichnet, daß zur lateralen Aufweitung bis auf den Durchmesser des Glasfaserkerns (19) eine Belichtungsmaske mit sich aufweitender Maskenöffnung verwendet wird.

18. Verfahren nach Anspruch 16 oder 17, dadurch gekennzeichnet, daß zur vertikalen Aufweitung bis auf den Durchmesser des Glasfaserkerns (19) die Belichtungsintensität und/oder die Belichtungszeit zur Glasfaser hin rampenartig vergrößert wird.

19. Verfahren nach Anspruch 14 oder 15, dadurch gekennzeichnet, daß in einem ersten Belichtungsschritt mit einer ersten Belichtungsmaske ein erster, spitz zur Glasfaser (11) hin zu laufender Lichtwellenleiter (17) gebildet wird, und daß in einem zweiten Belichtungsschritt mit einer zweiten Belichtungsmaske ein zweiter, den ersten Lichtwellenleiter (17) mit der Kopplungsendfläche verbindender Lichtwellenleiter (21) mit geringerem Brechungsindex gebildet wird, wobei der zweite Lichtwellenleiter (21) in seinem Durchmesser dem Glasfaserkern angepaßt ist.

20. Verfahren nach einem der Ansprüche 16 bis 19, dadurch gekennzeichnet, daß eine Belichtungsmaske mit variabler Transparenz für eine Nachbelichtung der Schicht (16) verwendet wird, die faserseitig eine höhere Transparenz und lichtwellenleiterseitig eine geringere Transparenz aufweist.

21. Verfahren nach einem der Ansprüche 12 bis 20, dadurch gekennzeichnet, daß die Freilegung des Positioniergrabens mittels eines Lasers durchgeführt wird (Laser-Ablation).

22. Verfahren nach einem der Ansprüche 12 bis 21, dadurch gekennzeichnet, daß eine Vielzahl von nebeneinanderliegenden Anschlüssen, Positioniergräben (12) und Lichtwellenleitern (17) gleichzeitig hergestellt wird.

## Claims

1. Integrated optical component, in particular a modulator, directional coupler, switch, polarizer, distributor, having an optical waveguide which is composed of an optical polymer and is disposed on a silicon substrate provided with at least one optical buffer layer having low refractive index, and having a positioning groove which is anisotropically etched into the substrate, is oriented essentially in an aligned manner with respect to the optical waveguide and has a V-shaped cross section for receiving a glass fibre to be coupled to the coupling end face of the optical waveguide by butt coupling, characterized in that the positioning groove (12) has on the coupling side an inclined end region which is filled with a plastics material (15), the optical waveguide (17) continuing on the plastics material (15) as far as an end face (18) of the plastics material (15), which end face (18) extends perpendicularly to the axial direction of the optical waveguide (17) and is situated in the plane of the coupling end face, and in that said end face (18) is disposed outside the inclined end region (13) of the positioning groove (12).

2. Component according to Claim 1, characterized in that a buffer layer (14) supporting the optical waveguide (17) and a layer (16) covering the plastics material (15) up to the plane of the end face (18) is composed of an optical polymer whose refractive index can be altered by exposure to light, the optical waveguide (17) being formed by suitable exposure to light of said layer (16) as part of the latter.

3. Component according to Claim 2, characterized in that that region of the layer (16) formed as optical waveguide (17) has a higher refractive index.

4. Component according to one of the preceding claims, characterized in that the positioning groove (12) has a dimensioning which aligns the glass-fibre core (19) of the glass fibre (11) inserted with the optical waveguide (17).

5. Component according to one of Claims 2 to 4, characterized in that the plastics material (15) for filling the positioning groove (12) is an optical polymer.

6. Component according to Claim 5, characterized in that the plastics material (15) is identical to the optical polymer of the layer (16) covering the buffer layer (14).

7. Component according to one of Claims 2 to 6, characterized in that the glass-fibre-side end region (17a) of the optical waveguide (17) is adiabatically expanded to the diameter of the glass-fibre core (19).

8. Component according to Claim 7, characterized in that a lateral and/or vertical expansion is provided.

9. Component according to one of Claims 2 to 6, characterized in that the glass-fibre-side end region (17b) of the optical waveguide (17) is tapered and debouches in a further optical waveguide (21) which has a lower refractive index and extends as far as the glass-fibre core (19).

10. Component according to Claim 9, characterized in that the further optical waveguide (21) has a greater extension in width and/or in depth and is matched to the dimensioning of the glass-fibre core (19) at the coupling end face.

11. Component according to one of Claims 2 to 10, characterized in that, to match the field of the optical waveguide (17) in the direction of the glass fibre (11), that region of the optical polymer layer (16) which surrounds the optical waveguide (17) has an adiabatic index pattern which reduces, in the direction of the glass fibre, the difference in the refractive index between optical waveguide (17) and the region surrounding the latter.

12. Process for producing an integrated optical component, such as a modulator, directional coupler, switch, polarizer, distributor, which component has an optical waveguide which is composed of an optical polymer and which is disposed on a silicon substrate provided with at least one optical buffer layer having low refractive index, a positioning groove having V-shaped cross section being etched anisotropically into the silicon substrate in an essentially aligned manner with respect to the optical waveguide by means of an exposure mask having an elongated mask perforation, for the purpose of receiving a glass fibre to be coupled to the optical waveguide, characterized in that, after the positioning groove (12) has been etched,
a) the optical buffer layer (14) is applied,
b) a layer (16) of an optical polymer is applied on top thereof, the positioning groove (12) being filled beforehand or simultaneously with a plastics material (15),
c) the optical waveguide (17) is formed by suitable local exposure to light or thermal polarization of said layer (16), and
d) the positioning groove (12) is laid bare as far as a plane (18) which extends vertically with respect to the axial direction of the optical waveguide (17) and forms a coupling end face.

13. Process according to Claim 12, characterized in that the application of the layer (16) and the filling of the positioning groove (12) are performed in one operation using the same optical polymer.

14. Process according to Claim 12 or 13, characterized in that an exposure mask is placed on the polymer layer (16) and an increase in refractive index is performed by photopolymerization in a region which is to serve as optical waveguide (17).

15. Process according to Claim 12 or 13, characterized in that an exposure mask is placed on the polymer layer (16) and a reduction in the refractive index of regions which delineate the optical waveguide (17) is performed by a UV photobleaching process.

16. Process according to Claim 14 or 15, characterized in that, to optimize the field matching between glass fibre (11) and optical waveguide (17), an adiabatic expansion of the optical waveguide (17) is performed upstream of the glass-fibre core (19).

17. Process according to Claim 16, characterized in that an exposure mask having expanding mask aperture is used for the purpose of lateral expansion up to the diameter of the glass-fibre core (19).

18. Process according to Claim 16 or 17, characterized in that the illlumination intensity and/or the exposure time is increased in ramp fashion in the direction of the glass fibre for the purpose of vertical expansion up to the diameter of the glass-fibre core (19).

19. Process according to Claim 14 or 15, characterized in that, in a first exposure step using a first exposure mask, a first optical waveguide (17) is formed which tapers towards the glass fibre (11), and in that, in a second exposure step using a second exposure mask, a second optical waveguide (21) is formed which has lower refractive index and joins the first optical waveguide (17) to the coupling end face, the diameter of the second optical waveguide (21) being matched to the glass-fibre core.

20. Process according to one of Claims 16 to 19, characterized in that an exposure mask having variable transparency is used for a postexposure of the layer (16) which has, on the fibre side, a higher transparency and, on the optical-waveguide side, a lower transparency.

21. Process according to one of Claims 12 to 20, characterized in that the positioning groove is laid bare by means of a laser (laser ablation).

22. Process according to one of Claims 12 to 21, characterized in that a multiplicity of mutually adjacent connections, positioning grooves (12) and optical waveguides (17) is produced simultaneously.

## Revendications

1. Composant optique intégré, en particulier modulateur, coupleur directif, interrupteur, polariseur, répartiteur, avec un guide d'ondes disposé sur un substrat en silicium pourvu d'au moins une couche optique tampon, guide d'ondes qui est en un polymère optique et comporte une fosse de positionnement gravée de façon anisotrope dans le substrat, orientée sensiblement en alignement avec le guide d'ondes lumineuses, fosse qui, en section transversale, a la forme d'un V et sert à recevoir une fibre de verre à réunir par couplage par contact à la surface terminale de couplage du guide d'ondes lumineuses, composant optique intégré caractérisé en ce que la fosse de positionnement (12) présente, du côté du couplage, une zone terminale s'étendant obliquement, zone qui est remplie d'une matière plastique (15), le guide d'ondes lumineuses (17) se prolongeant sur la matière plastique (15) jusqu'à une surface terminale de la matière plastique (15) s'étendant perpendiculairement au sens axial du guide d'ondes lumineuses (17) et se trouvant dans le plan de la surface terminale de couplage, et en ce que cette surface terminale (18) est disposée en dehors de la zone terminale (13) de la fosse de positionnement (12) qui s'étend obliquement.

2. Composant selon la revendication 1, caractérisé en ce que l'on prévoit une couche (16) recouvrant la couche tampon (14) qui porte le guide d'ondes lumineuses (17) et la matière plastique (15) jusqu'au plan de la surface terminale (18), couche réalisée en un polymère optique dont l'indice de réfraction varie par exposition, le guide d'ondes lumineuses (17) étant constitué par l'exposition adéquate de cette couche (16) qui en fait partie.

3. Composant selon la revendication 2, caractérisé en ce que la zone de la couche (16) constituée comme guide d'ondes lumineuses (17), présente un indice de réfraction plus élevé.

4. Composant selon l'une des revendications précédentes, caractérisé en ce que la fosse de positionnement (12) présente des dimensions grâce auxquelles le bloc de fibres (19) composé des fibres de verre insérées (11) vient en alignement avec le guide d'ondes lumineuses (17).

5. Composant selon l'une des revendications 2 à 4, caractérisé en ce que la matière plastique (15) qui sert au remplissage de la fosse de positionnement (12), est un polymère optique.

6. Composant selon la revendication 5, caractérisé en ce que la matière plastique (15) est identique au polymère optique de la couche (16) qui recouvre la couche tampon (14).

7. Composant selon l'une quelconque des revendication 2 à 6, caractérisé en ce que la zone terminale (17a) située du côté de la fibre de verre, est élargie adiabatiquement au diamètre du bloc de fibres de verre (19).

8. Composant selon la revendication 7, caractérisé en ce que l'on prévoit un élargissement latéral et/ou vertical.

9. Composant selon l'une quelconque des revendications 2 à 6, caractérisé en ce que la zone terminale (17b), située du côté de la fibre de verre, du guide d'ondes lumineuses (17) se termine en pointe et débouche dans un autre guide d'ondes lumineuses (21) à un indice de réfraction plus bas.

10. Composant selon la revendication 9, caractérisé en ce que l'autre guide d'ondes lumineuses (21) présente une plus grande étendue en largeur et/ou en profondeur et est adapté aux dimensions du bloc de fibres (19) sur la surface terminale de couplage.

11. Composant selon l'une quelconque des revendications 2 à 10, caractérisé en ce que, pour adapter le champ du guide d'ondes lumineuses (17) en direction de la fibre de verre (11), la zone qui entoure le guide d'ondes lumineuses (17), de la couche optique polymère (16), présente une évolution de son indice de réfraction adiabatique, qui réduit la différence d'indice de réfraction entre le guide d'ondes lumineuses (17) et cette zone qui l'entoure en direction de la fibre de verre.

12. Procédé de fabrication d'un composant optique intégré, tel qu'un modulateur, coupleur directif, interrupteur, polariseur, répartiteur, qui présente un guide d'ondes lumineuses, réalisé en un polymère optique, qui est disposé sur un substrat en silicium pourvu d'au moins une couche tampon optique à indice de réfraction bas, une fosse de positionnement à section transversale en forme de V étant gravée de façon anisotrope dans le substrat en silicium de façon à être sensiblement alignée par rapport au guide d'ondes lumineuses au moyen d'un masque d'exposition présentant une ouverture de masque s'étendant en longueur pour recevoir une fibre de verre à coupler sur le guide d'ondes lumineuses, procédé caractérisé en ce qu'après la gravure de la fosse de positionnement (12):
a) on met la couche tampon (14) optique,
b) on met dessus une couche (16) en un polymère optique, la fosse de positionnement (12) étant auparavant ou en même temps remplie d'une matière plastique (15),
c) on forme le guide. d'ondes lumineuses (17) par une exposition locale adéquate ou une thermopolarisation de cette couche (16) et,
d) on met à nu la fosse de positionnement (12) jusqu'à un plan (18) s'étendant verticalement par rapport au sens axial du guide d'ondes lumineuses (17), qui forme une surface terminale de couplage.

13. Procédé selon la revendication 12, caractérisé en ce que la mise en place de la couche (16) et le remplissage de la fosse de positionnement (12) sont réalisés dans une phase de travail utilisant le même polymère optique.

14. Procédé selon la revendication 12 ou 13, caractérisé en ce que l'on dépose un masque d'exposition sur la couche polymère (16) et on réalise par photopolymérisation une augmentation de l'indice de réfraction dans une zone qui doit servir de guide d'ondes lumineuses (17).

15. Procédé selon la revendication 12 ou 13, caractérisé en ce que l'on dépose un masque d'exposition sur la couche polymère (16) et on réalise, par un processus de photodécoloration aux ultraviolets, une réduction de l'indice de réfraction des zones qui délimitent le guide d'ondes lumineuses (17).

16. Procédé selon la revendication 14 ou 15, caractérisé en ce que pour optimiser l'adaptation des champs entre la fibre de verre (11) et le guide d'ondes lumineuses (17), on réalise un élargissement adiabatique du guide d'ondes lumineuses (17) avant le bloc de fibres de verre (19).

17. Procédé selon la revendication 16, caractérisé en ce que pour réaliser l'élargissemnt latéral jusqu'au diamètre du bloc des fibres de verre (19), on utilise un masque d'exposition ayant une ouverture de masque qui s'élargit.

18. Procédé selon la revendication 17, caractérisé en ce que pour réaliser l'élargissement vertical jusqu'au diamètre du bloc de fibres de verre (19), on augmente selon une rampe l'intensité de l'exposition et/ou le temps d'exposition en direction de la fibre de verre.

19. Procédé selon la revendication 14 ou 15, caractérisé en ce que, dans une première séquence d'exposition avec un premier masque d'exposition, on forme un premier guide d'ondes lumineuses (17) s'étendant en pointe vers la fibre de verre (11), et en ce que, dans une deuxième séquence d'exposition avec un deuxième masque d'exposition, on forme un deuxième guide d'ondes lumineuses (21), avec un indice de réfraction plus faible, qui relie le premier guide d'ondes lumineuses (17 à la surface terminale de couplage, le second guide d'ondes lumineuses (21) étant adapté quant à son diamètre au bloc de fibres de verre.

20. Procédé selon l'une quelconque des revendications 16 à 19, caractérisé en ce que l'on utilise un masque d'exposition à transparence variable pour une exposition ultérieure de la couche (16), masque qui présente une transparence plus élevée du côté de la fibre et une transparence plus faible du côté du guide d'ondes lumineuses.

21. Procédé selon l'une quelconque des revendications 12 à 20, caractérisé en ce que l'on exécute la mise à nu de la fosse de positionnement au moyen d'un laser (enlèvement au laser).

22. Procédé selon l'une des revendications 12 à 21, caractérisé en ce qu'une multiplicité de raccords situés les uns à côté des autres, de fosses de positionnement (12) et de guides d'ondes lumineuses, est fabriquée en même temps.
